# EUROPÄISCHE PATENTANMELDUNG

(11) **EP 1 254 873 A2**
(43) Veröffentlichungstag der Anmeldung: **06.11.2002**
(21) Anmeldenummer: 02008069.3
(22) Anmeldetag: 11.04.2002
(51) Int. Cl.: C04B 7/38

(54) **Verfahren und Anlage zur Herstellung von Zementklinker**

(30) Priorität: 24.04.2001 DE 10119977
(71) Anmelder: KHD Humboldt Wedag AG, 51105 Köln (DE)
(72) Erfinder: Ramesohl, Hubert, 51427 Bergisch Gladbach (DE); Meyer, Hans-Wilhelm, Dr., 90579 Langenzenn (DE)

(57) **Zusammenfassung**

Um bei der Herstellung von Zementklinker bzw. Zement mit Zuschlag eines Zementzuschlagsstoffes (40) wie z. B. Schlacke, die in einer Kreislaufmahlanlage in zementfeines Schlackenmehl (32) gemahlen wird, eine Möglichkeit zu schaffen, überschüssige Schlackenkapazität im Zementklinkerherstellungsprozess nutzbringend zu verwerten, wird erfindungsgemäß vorgeschlagen, eine aus einer Dreifraktionen-Sichteinrichtung (31) abgezogene Schlacken-Mittelkornfraktion (33, 34) als Rohstoffkomponente z. B. dem Guteinlauf des Drehrohrofens (20) der Zementklinkerproduktionslinie zuzuschlagen und dabei die chemische Zusammensetzung der übrigen Rohstoffkomponenten (10) auf die zugeschlagene Menge (34) der Schlacken-Mittelkornfraktion abzustimmen.

## Beschreibung

Die Erfindung betrifft ein Verfahren zur Herstellung von Zementklinker aus Rohmehl, das in wenigstens einem vom Abgas eines Drehrohrofens durchströmten Wärmetauscherstrang vorerhitzt, ggf. in einer Vorcalcinationsstufe vorcalciniert und in der Sinterzone des Drehrohrofens zu Zementklinker gebrannt wird, der in einem nachgeschalteten Kühler gekühlt wird, wobei ein im Zementklinkerherstellungsprozess verwertbarer nicht vorerhitzter Zuschlagsstoff wie z. B. Schlacke dem Prozessmehl zugeschlagen wird. Die Erfindung betrifft außerdem eine Anlage zur Durchführung des Verfahrens.

Es ist bekannt, bei der Herstellung von Zementklinker die bei der Stahlerzeugung anfallende Schlacke als Rohstoffkomponente zu verwerten, indem diese direkt in den Guteinlauf des Drehrohrofens eingeführt wird. Die Schlacke schmilzt in der Sinterzone des Drehrohrofens und wird dort in den sich bildenden Zementklinker eingebunden, der dann zu Portlandzement vermahlen wird.

Andererseits ist es bekannt, latent hydraulische Stoffe und andere Zugschlagsstoffe, z. B. granulierte Hochofenschlacke, auch Hüttensand genannt, zusammen mit Portlandzementklinker gemeinsam zum Schlacken-Portland-Zement zu vermahlen, üblicherweise in einer Kugelmühle, wobei auch die getrennte Vermahlung und anschließende homogene Vermischung möglich ist. Die Schlacke ist oft schwerer mahlbar als der Zementklinker, so dass es bekannt ist, die Schlacke getrennt für sich z. B. im Walzenspalt einer energiesparenden Gutbettzerkleinerungs-Hochdruck-Walzenpresse zu mahlen und auf diese Weise die eingesetzte Mahlenergie zu verringern und für beide Mahlprodukte die jeweils optimale Mahlfeinheit zu erreichen.

Moderne Kreislaufmahlanlagen mit Gutbettzerkleinerungs-Hochdruck-Walzenpresse und Dreifraktionen-Sichter (DE-A-42 23 762) haben in erster Linie den Sinn, bei der Zementmahlung mit vergleichsweise niedrigem Aufwand an Investitions- und Betriebskosten zwei unterschiedlich feine Zementprodukte herzustellen. Sie bieten aber auch die Möglichkeit, Mahlgut wie Schlacke in die mit der Sichtluft abtransportierte Feinkornfraktion bzw. Fertiggutfraktion, in eine zur Walzenpresse rezirkulierte Grobkornfraktion und in eine Mittelkornfraktion als mittelfeines zweites Fertigprodukt zu vermahlen. Während die Feinkornfraktion als fertig feines Schlackenmehl einem Schlackenmehlsilo zugeleitet werden könnte zwecks nachfolgender Abmischung mit dem separat gemahlenen Zementklinker nach vorgegebener Rezeptur zum Hüttensandzement bzw. Schlackenzement, ist eine geeignete Verwendung einer Schlacken-Mittelkornfraktion, die gröber ist als Zement, bei der Zementherstellung bisher nicht gegeben. Andererseits würde bei einer Schlacken-Kreislaufmahlung die Herstellung des fertig feinen Schlackenmehls durch Abzug einer Mittelkornfraktion aus dem Mahlkreislauf erheblich erleichtert, weil das Aufmahlen von Schlacke bzw. von Hüttensanden infolge der Schwermahlbarkeit energetisch aufwendig ist.

Der Erfindung liegt die Aufgabe zugrunde, bei der Herstellung von Zementklinker bzw. Zement mit Zuschlag eines Zementzuschlagsstoffes wie Schlacke, die in einer Kreislaufmahlanlage in zementfeines Schlackenmehl gemahlen wird, eine Möglichkeit zu schaffen, überschüssige Schlackenkapazität im Zementklinkerherstellungsprozess nutzbringend zu verwerten.

Diese Aufgabe wird gemäß der Erfindung verfahrensmäßig mit einem Verfahren mit den Maßnahmen des Anspruchs 1 und vorrichtungsmäßig mit einer Anlage mit den Merkmalen des Anspruchs 8 gelöst. Vorteilhafte Weiterbildungen der Erfindung sind in den Unteransprüchen angegeben.

Die Erfindung geht von der Überlegung aus, bei der Zementherstellung verwertbare Zuschlagsstoffe wie z. B. die bei der Eisen- oder Stahlerzeugung anfallende Schlacke, Puzzolane, Kalkstein oder Trass wegen ihrer schweren Mahlbarkeit getrennt vom Zementklinker zu vermahlen. Erfindungsgemäß wird nun vorgeschlagen, solche schwer mahlbaren Zuschlagsstoffe in einer Kreislaufmahlanlage mit Mühle und Dreifraktionen-Sichteinrichtung zu mahlen, wobei aus der Sichteinrichtung außer der Feinkornfraktion von z. B. 100 % < 32 µm und außer der zur Mühle rezirkulierten Grobkornfraktion (Grieße) als dritte Fraktion eine sogenannte Mittelkornfraktion mit einer Kornfeinheit von z. B. 100 % < 200 µm als zweites Produkt abziehbar ist. Nimmt man bei einer solchen Dreifraktionen-Sichteinrichtung diese Mittelkornfraktion aus dem Mahlkreislauf heraus, kann die Durchsatzleistung der Kreislaufmahlanlage, z. B. Schlackenmahlanlage, ganz erheblich gesteigert werden.

Während die aus der Dreifraktionen-Sichteinrichtung abgezogene Feinkornfraktion als zementfeines Produkt einem Silo zugeführt wird mit der Möglichkeit der nachfolgenden Abmischung mit gemahlenem Zementklinker zu Mischzement, wird die aus dieser Sichteinrichtung abgezogene Mittelkornfraktion als wertvolle Rohmaterialkomponente dem Prozessmehl der Zementklinkerproduktionslinie zugeschlagen, und zwar durch Einführung in die Drehofeneinlaufkammer und/oder Zudosierung zum Aufgabegut des Drehofens und/oder zum Calcinator und/oder zum Wärmetauscherstrang. Die zugeschlagene Menge der Mittelkornfraktion aus der Schlackevermahlung ersetzt einen Teil des Zementrohmaterials, ohne auf Zementrohmehlfeinheit gemahlen werden zu müssen. Die chemische Zusammensetzung der übrigen Rohstoffkomponenten wird auf die zugeschlagene Menge der Schlacken-Mittelkornfraktion abgestimmt.

Die mit der Erfindung verbundenen Vorteile sind kurz zusammengefasst wie folgt:
- Völlig getrennte Vermahlung der unterschiedlich mahlbaren Stoffe z. B. Schlacke, Puzzolane, Trass etc. einerseits und Zementklinker andererseits. Die Zuschlagsstoffe können für eine optimale Festigkeitsentwicklung des mit dem Zement zubereiteten Betons auch feiner gemahlen werden als der Zementklinker.
- Steigerung der Durchsatzleistung der Schlacken-Kreislaufmahlanlage durch Herausnahme einer Mittelkornfraktion aus dem Mahlkreislauf.
- Hohe Feuchte z. B. von granulierten Schlacken stört den Mahlprozess nicht, weil die feuchten Schlacken in der Dreifraktionen-Sichteinrichtung getrocknet werden können.
- Verwendung der Schlacken-Mittelkornfraktion als wertvolle Rohstoffkomponente bei der Zementklinkerproduktion. Aufgrund der ähnlichen chemischen Zusammensetzung können silikatische Komponenten der Rohmehlmischung (z. B. Tone, Sande, Schiefer oder Bauxite) ganz oder teilweise durch einen solchen Zuschlagsstoff ersetzt werden.
- Weil die Schlacken-Mittelkornfraktion nur eine geringe Feuchte, kaum Kristallwasser sowie kaum Carbonate enthält, ist praktisch keine Trocknung/Dehydratisierung und keine Calcinierung mehr notwendig, daher ggf. unter Umgehung des Wärmetauscherstrangs und ggf. des Calcinators Zuschlag der Mittelkornfraktion zum Prozessmehl im Bereich des Guteinlaufes des Drehrohrofens. Daher bei der Zementklinkerherstellung weniger spezifischer Wärme- bzw. Brennstoffverbrauch und weniger Emission an Abgasschadstoffen wie z. B. auch CO₂.
- Kühlung der thermisch hoch beanspruchten Drehofen-Einlaufkammer durch die eingeführte kalte nicht vorerhitzte Schlacken-Mittelkornfraktion und damit Steigerung der Betriebssicherheit.
- Die in die Drehofen-Einlaufkammer eingeführten kalten Partikel der Schlacken-Mittelkornfraktion können als Kondensationskeime wirken, an welchen im Drehofenabgas enthaltene gas- bzw. dampfförmige Schadstoffe wie insbesondere z. B. Alkalichloride und Alkalisulfate kondensieren (ausfrieren bzw. sublimieren) können und welche dann mittels eines Teilgasabzuges aus dem Ofenkreislauf ggf. ausgeschleust werden können.

Die Kreislaufmahlanlage zur Mahlung des Zuschlagsstoffes wie z. B. Schlacke weist mit Vorteil die energiesparende Hochdruck-Walzenpresse mit Gutbettzerkleinerung des Schlackenmateriales auf. Die in der Walzenpresse gepressten Gutmaterialschülpen werden dann desagglomeriert und in drei Kornfraktionen gesichtet. Die Sichteinrichtung besteht mit Vorteil aus einem kompakt gebauten Dreifraktionen-Sichter mit einem statischen Kaskadensichter als Vorsichtungskammer, der wenigstens ein im Sichtergehäuse rotierbar angeordneter, am Rotorumfang mit Turboelementen versehener Stabkorb eines dynamischen Sichterteils nachgeschaltet ist, an dessen Peripherie der Austrag der Schlacken-Mittelkornfraktion angeordnet ist.

Der statische Kaskadensichterteil weist ein V-förmiges schachtförmiges Gehäuse auf mit zwei vom Sichtergehäuse umschlossenen und zwischen sich eine Sichtzone bildenden sowie von Sichtluft bzw.

Heißgas als Trocknungsgas etwa im Querstrom durchströmten Sichtzonenbegrenzungswänden, die schräg nach unten in Richtung zur Austragsöffnung für die ausgesichtete Grobkornfraktion geneigte kaskadenartig bzw. jalousieartig angeordnete Leitbleche aufweisen, wobei diese beiden Leitblechwände und die dazwischen liegende Sichtzone mit einem von der Vertikalen abweichenden Winkel schräg liegend angeordnet sind.

Während der Austrag der Mittelkornfraktion der Sichteinrichtung entweder direkt oder z. B. über LKW-Verkehr z. B. mit dem Guteinlaufbereich des Drehrohrofens in Verbindung steht, kann der Austrag der zementfeinen Feinkornfraktion der gemahlenen Schlacke mit dem Silo zur nachfolgenden Abmischung mit gemahlenem Zementklinker zum Mischzement in Verbindung stehen.

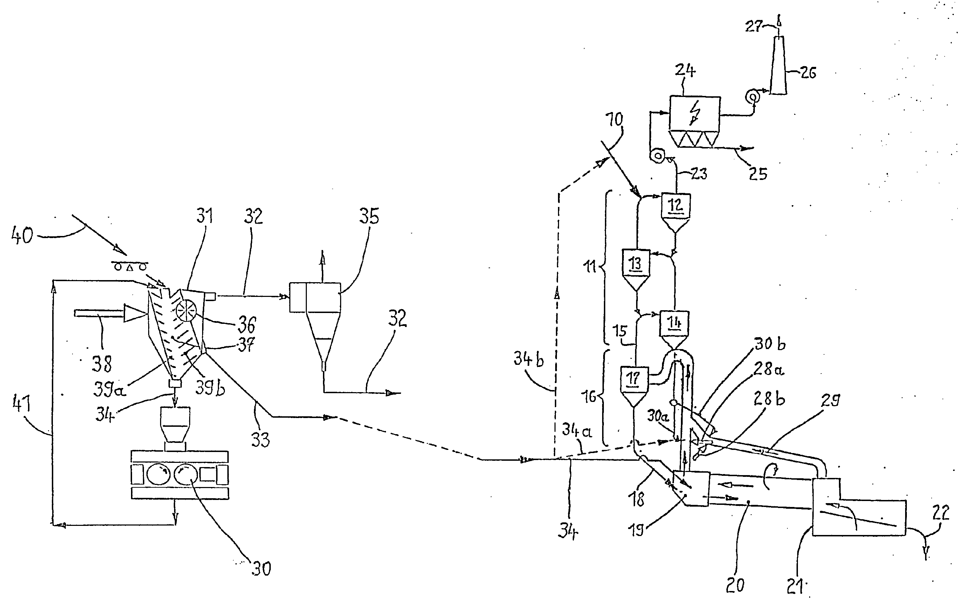

Die Erfindung und deren weitere Merkmale und Vorteile werden anhand des in der Zeichnung schematisch dargestellten Ausführungsbeispieles näher erläutert.

Die Zeichnung zeigt eine Anlage zur Herstellung von Zementklinker aus Zementrohmehl, das bei 10 in die Vorwärmstufe 11 aufgegeben wird, wo es nacheinander die Zyklonschwebegas-Wärmetauscher 12 bis 14 im kombinierten Gleich-/Gegenstrom zum heißen Abgas 15 einer Calcinierstufe 16 durchwandert, um im untersten Zyklon 17 vom heißen Abgasstrom 15 abgetrennt und als hochgradig (z. B. 95 %) calciniertes Zementrohmehl 18 in die Einlaufkammer 19 des Drehrohrofens 20 eingeführt zu werden, in dessen Sinterzone es zu Zementklinker gebrannt wird, der anschließend in einem Klinkerkühler 21, im Ausführungsbeispiel ein Rostkühler, abgekühlt wird. Der abgekühlte Zementklinker verlässt den Klinkerkühler 21 bei 22 und wird anschließend der nicht dargestellten Zementklinkermahlung zugeführt.

Das am Zementrohmehl abgekühlte Abgas verlässt die Vorwärmstufe 11 der Anlage bei 23. Dieses Abgas 23 wird in einem Staubabscheider z. B. elektrostatischen Staubabscheider 24 von Staub 25 befreit und anschließend über einen Hauptkamin 26 als Abgas 27 abgezogen.

In der mit Brennstoff 28a, 28b und Tertiärluft 29 des Klinkerkühlers versorgten Calcinierstufe 16 wird das aus der zweituntersten Zyklonstufe 14 austretende vorgewärmte Zementrohmehl 30a, 30b hochgradig calciniert. Dabei wird der Brennstoff 28a in der von der Ofeneinlaufkammer 19 kommenden Ofenabgassteigleitung mit Vorteil unterstöchiometrisch verbrannt zwecks Erzeugung einer CO-haltigen Reduktionszone zur Reduktion des im Drehofenabgas enthaltenen Schadstoffs NOₓ, während der Brennstoff 28b in der vom Klinkerkühler kommenden Tertiärluft 29 mit Vorteil überstöchiometrisch verbrannt wird.

Erfindungsgemäß ist der Zementklinkerproduktionslinie eine Mahlanlage zur Mahlung eines Stoffes 40 wie z. B. Schlacke zugeordnet, die in der Regel schwerer mahlbar ist als der Zementklinker. Die Schlackenmahlanlage ist mit Vorteil eine Kreislaufmahlanlage und sie umfasst wenigstens die folgenden Komponenten: Eine Mühle, insbesondere eine Hochdruck-Walzenpresse 30 zur energiesparenden Gutbettzerkleinerung des Schlackenmaterials sowie einen Dreifraktionen-Sichter 31, der das Schlackenmaterial in die drei Kornfraktionen Fertigutfraktion bzw. Feinkornfraktion 32, Mittelkornfraktion 33 und zur Walzenpresse 30 rezirkulierte Grobkornfraktion 34 (Grieße) klassiert. Die Feinheit der mit der Sichtluft abgezogenen fertig feinen Schlacke 32 kann auf eine Fertiggutfeinheit von 100 % < etwa 32 µm bzw. > 4000 Blaine eingestellt werden. Die im Staubabscheider 35 von der Sichtluft abgetrennte fertig feine Schlacke 32 kann auch feiner eingestellt werden als die Feinheit des gemahlenen Zementklinkers, der in einer eigenen nicht dargestellten Zementklinkermahlanlage gemahlen wird. Jedenfalls kann das fertig feine Schlackenprodukt 32 in einem Silo gespeichert werden zwecks späterer Herstellung eines Mischzements. In den Zeiten, in denen ein genügend großer Vorrat an Schlackenprodukt vorhanden ist, kann die Schlackenmahlanlage auch zur Mahlung des Zementklinkers eingesetzt werden.

Die Feinheit der aus der Schlackenmahlanlage abgezogenen Mittelkornfraktion 33, deren Menge z. B. 30 % des Aufgabegutes der Mahlanlage betragen kann, wird auf 100 % < etwa 200 µm eingestellt. Diese Mittelkornfraktion 33, durch deren Abzug die Durchsatzleistung der Schlacken-Kreislaufmahlanlage erheblich gesteigert werden kann, wird im Zementklinkerherstellungsprozess dadurch nutzbringend verwertet, dass sie über eine Fördereinrichtung 34, bei zu großer Entfernung bewerkstelligt z. B. durch LKW-Transport, dem Prozessmehl zugeschlagen wird, und zwar durch unmittelbare Einführung in die Drehofeneinlaufkammer 19. Durch die kalten nicht vorerhitzten Partikel der Mittelkornfraktion 33 wird das Drehofenabgas, das bei einem modernen Drehrohrofen 20 eine Austrittstemperatur von z. B. 1200 bis 1300° C ohne weiteres aufweisen kann, schockartig auf eine Temperatur von z. B. 1150° C abgekühlt, wodurch die Einlaufkammer 19 kontinuierlich gekühlt und vor thermischer Überbeanspruchung geschützt werden kann. Diese Mittelkornfraktion 33 der Schlacke wird in der Sinterzone des Drehrohrofens in den Zementklinker eingebunden. Die Schlacken-Mittelkornfraktion 33 ist also eine Rohstoffkomponente bei der Zementklinkerherstellung, wobei die chemische Zusammensetzung des Zementrohmehls 10 auf die zugeschlagene Menge und Zusammensetzung der Schlacken-Mittelkornfraktion 33 abgestimmt wird.

Die Mittelkornfraktion 33 könnte auch dem Aufgabegut 18 des Drehofens 20 und/oder über den gestrichelt gezeichneten Weg 34a dem in die Calcinierstufe 16 einzuführenden Rohmehl zudosiert werden und/oder über den gestrichelt gezeichneten Weg 34b dem Wärmetauscherstrang 11 zudosiert werden.

Der im Vertikalschnitt dargestellte Dreifraktionen-Sichter 31 weist einen statischen Kaskadensichter als Vorsichtungskammer auf, der wenigstens ein im Sichtergehäuse rotierbar angeordneter, am Rotorumfang mit Turboelementen versehener Stabkorb 36 eines dynamischen Sichterteils nachgeschaltet ist, an dessen Peripherie der Austrag der Schlacken-Mittelkornfraktion 33 angeordnet ist. Der statische Kaskadensichterteil weist ein V-förmiges schachtförmiges Gehäuse auf mit zwei vom Sichtergehäuse umschlossenen und zwischen sich eine Sichtzone 37 bildenden sowie von Sichtluft 38 bzw. Heißgas als Trocknungsgas etwa im Querstrom durchströmten Sichtzonenbegrenzungswänden, die schräg nach unten in Richtung zur Austragsöffnung für die ausgesichtete Grobkornfraktion 34 geneigte kaskadenartig bzw. jalousieartig angeordnete Leitbleche 39a, 39b aufweisen, wobei diese beiden Leitblechwände und die dazwischen liegende Sichtzone 37 mit einem von der Vertikalen abweichenden Winkel schräg liegend angeordnet sind.

Das zu sichtende Gut, im zeichnerischen Ausführungsbeispiel ein Gemisch aus dem Frischgut Schlacke 40 und rezirkuliertem Pressenaustragsgut bzw. Pressschülpen 41, wird in die Guteintragsöffnung an der Oberseite des statischen Kaskadensichterteils eingeführt. Beim Fall mit Aufschlag des Gutes insbesondere an den Leitblechen 39a wird das Sichtgut im Querstrom gesichtet und Gutagglomerate werden gleichzeitig desagglomeriert. Statt der Leitblechwände 39a, 39b können auch perforierte Bleche wie Siebbleche etc. eingesetzt werden.

Die Anlieferungsfeuchte der Schlacke 40, z. B. granulierte Hochofenschlacke, kann z. B. 8 bis 10 % betragen. Bei derart hohen Feuchten des Zuschlagsstoffes wird als Sichtluft 38 Trocknungsgas eingesetzt, z. B. ein Teilstrom des Abgases 23 der Zementklinkerproduktionslinie, durch den das fertig feine Schlackenprodukt 32 sowie die Mittelkornfraktion 33 auf eine Restfeuchte von z. B. ca. 0,5 % getrocknet werden.

Der in der Kreislaufmahlanlage zu mahlende Zuschlagsstoff 40 wie Schlacke, Puzzolane, Trass etc. kann anstelle am Sichter 31 auch an der Walzenpresse 30, nämlich in deren Gutaufgabeschacht in den Mahlkreislauf eingeschleust werden.

Die Dreifraktionen-Sichteinrichtung 31 kann auch durch Hintereinanderschaltung zweier getrennter Sichter realisiert sein, nämlich eines statischen Kaskadensichters, dem ein dynamischer Stabkorbsichter oder ein statischer Luftstromsichter als Nachsichter nachgeschaltet ist, wobei dann der Grobgutaustrag des nachgeschalteten Sichters die Mittelkornfraktion 33 und der Feingutaustrag dieses Sichters die Feinkornfraktion 32 darstellt.

Die Erfindung erstreckt sich auch auf Sichteinrichtungen, bei denen mehr als eine Mittelkornfraktion 33 abziehbar sind.

## Patentansprüche

1. Verfahren zur Herstellung von Zementklinker aus Rohmehl (10), das in wenigstens einem vom Abgas eines Drehrohrofens (20) durchströmten Wärmetauscherstrang (11) vorerhitzt, ggf. in einer Vorcalcinationsstufe (16) vorcalciniert und in der Sinterstufe des Drehrohrofens (20) zu Zementklinker gebrannt wird, der in einem nachgeschalteten Kühler (21) gekühlt wird, wobei ein im Zementklinkerherstellungsprozess verwertbarer nicht vorerhitzter Zuschlagsstoff wie z. B. Schlacke dem Prozessmehl zugeschlagen wird,
**dadurch gekennzeichnet, dass** als dem Prozessmehl zugeschlagener Stoff die Mittelkornfraktion (33, 34) des Zuschlagsstoffes aus einer Kreislaufmahlanlage verwendet wird, wobei die chemische Zusammensetzung der Rohstoffkomponenten (10) auf die zugeschlagene Menge (34) der Zuschlagsstoff-Mittelkornfraktion (33) abgestimmt wird.

2. Verfahren nach Anspruch 1,
**dadurch gekennzeichnet, dass** die Zuschlagsstoff-Mittelkornfraktion (33) dem Aufgabegut des Drehofens (20) und/oder dem Wärmetauscherstrang (11) und/oder der Vorcalcinationsstufe (16) zudosiert und/oder unmittelbar in die Drehofeneinlaufkammer (19) eingeführt wird.

3. Verfahren nach Anspruch 1,
**dadurch gekennzeichnet, dass** die Zuschlagsstoff- wie Schlacken-Mittelkornfraktion (33) der Schlacken-Kreislaufmahlung einer Dreifraktionen-Sichteinrichtung (31) entnommen wird, welche die Schlacke (40) in eine Feinkornfraktion (32), in die Mittelkornfraktion (33) und in eine zur Mühle (30) rezirkulierten Grobkornfraktion (34) (Grieße) klassiert.

4. Verfahren nach Anspruch 3,
**dadurch gekennzeichnet, dass** wenigstens ein Teil der aus der Sichteinrichtung (31) der Schlackenkreislaufmahlung abgezogenen Schlacken-Feinkornfraktion (32) bei der Vermahlung des Zementklinkers (22) zu Schlackenportlandzement bzw. bei der Herstellung des Mischzementes eingesetzt wird.

5. Verfahren nach Anspruch 1,
**dadurch gekennzeichnet, dass** als Zuschlagsstoff anstelle von Schlacke (40) Puzzolane, Trass oder ein Gemisch solcher latent hydraulischer Stoffe eingesetzt werden.

6. Verfahren nach einem der Ansprüche 1 bis 5,
**dadurch gekennzeichnet, dass** die Feinheit der Mittelkornfraktion (33) auf 100 % < etwa 200 µm und die Fertiggutfeinheit der Feinkornfraktion (32) auf > 4000 Blaine eingestellt werden.

7. Verfahren nach einem der Ansprüche 1 bis 6,
**dadurch gekennzeichnet, dass** die Zuschlagsstoffe (40) wie Schlacke in der insbesondere als Dreifraktionen-Sichter (31) ausgebildeten Sichteinrichtung der Kreislaufmahlung getrocknet werden.

8. Anlage zur Herstellung von Zementklinker aus Rohmehl, mit Rohmehl-Vorerhitzer (11), Sinter-Drehrohrofen (20) und Klinkerkühler (21),
**dadurch gekennzeichnet, dass** die Zementklinker-Herstellungsanlage mit einer Kreislaufmahlanlage zur Mahlung eines Zuschlagsstoffes (40) wie Schlacke in Verbindung steht, wobei die Kreislaufmahlanlage wenigstens die folgenden Komponenten umfasst:
a) eine Hochdruck-Walzenpresse (30) mit Gutbettzerkleinerung des Schlackenmateriales,
b) eine Dreifraktionen-Sichteinrichtung (31), die das Schlackenmaterial in die drei Kornfraktionen Fertiggut bzw. Feinkornfraktion (32), Mittelkornfraktion (33) und zur Walzenpresse rezirkulierten Grobkornfraktion (34) klassiert,
c) Verbindung (34 bzw. 34a bzw. 34b) zwischen dem Austrag der Schlacken-Mittelkornfraktion (33) aus der Sichteinrichtung (31) und dem Guteinlauf des Drehrohrofens (20) und/oder der Vorcaicinationsstufe (16) und/oder dem Wärmetauscherstrang (11).

9. Anlage nach Anspruch 8,
**dadurch gekennzeichnet, dass** die Sichteinrichtung aus einem kompakt gebauten Dreifraktionen-Sichter (31) besteht mit einem statischen Kaskadensichter als Vorsichtungskammer, der wenigstens ein im Sichtergehäuse rotierbar angeordneter, am Rotorumfang mit Turboelementen versehener Stabkorb (36) eines dynamischen Sichterteils nachgeschaltet ist, an dessen Peripherie der Austrag der Schlacken-Mittelkornfraktion (33) angeordnet ist, wobei der statische Kaskadensichterteil ein V-förmiges schachtförmiges Gehäuse aufweist mit zwei vom Sichtergehäuse umschlossenen und zwischen sich eine Sichtzone (37) bildenden sowie von Sichtluft (38) bzw. Heißgas als Trocknungsgas etwa im Querstrom durchströmten Sichtzonenbegrenzungswänden, die schräg nach unten in Richtung zur Austragsöffnung für die ausgesichtete Grobkornfraktion (34) geneigte kaskadenartig bzw. jalousieartig angeordnete Leitbleche (39a, 39b) aufweisen, wobei diese beiden Leitblechwände und die dazwischen liegende Sichtzone (37) mit einem von der Vertikalen abweichenden Winkel schräg liegend angeordnet sind.

10. Anlage nach Anspruch 8,
**dadurch gekennzeichnet, dass** der Austrag der Schlacken-Fertiggutfraktion bzw. Feinkornfraktion (32) mit der Mahleinrichtung des Zementklinkers (22) in Verbindung steht.
